# EUROPEAN PATENT APPLICATION

(11) **EP 4 618 327 A1**
(43) Date of publication of application: **17.09.2025**
(21) Application number: 24162700.9
(22) Date of filing: 11.03.2024
(51) Int. Cl.: H01S 3/13, F25D 19/00

(54) **APPARATUS AND METHOD FOR PROVIDING A CONTROL SIGNAL FOR STABILIZING A FREQUENCY OF AN OPTICAL OUTPUT OF A LASER SYSTEM**

(71) Applicant: Technische Universität München, 80333 München (DE)
(72) Inventor: REISERER, Andreas, 85748 Garching (DE)
(74) Representative: Lucke, Andreas

(57) **Abstract**

An apparatus is adapted to provide a control signal for stabilizing a frequency of an optical output of a laser system. The apparatus comprises an optical resonator, a doped material arranged in the optical resonator, and a thermal insulation system. The doped material comprises a matrix doped with a rare-earth element. The thermal insulation system is adapted to thermally insulate the optical resonator from an environment outside of the thermal insulation system. The apparatus is adapted to provide the control signal based on an optical signal from the resonator when an optical input is provided to the resonator. The control signal is associated with a length of the optical resonator and/or with a refractive index of the doped material.

## Description

### TECHNICAL FIELD

The present disclosure relates to an apparatus for providing a control signal for stabilizing a frequency of an optical output of a laser system, and in particular to an optical apparatus with a resonator such as a Fabry-Perot type or a chip-based nanophotonic resonator for operation at a cryogenic temperature.

### BACKGROUND

Laser systems with stable frequencies play a decisive role in the search for new quantum effects as well as for controlling other laser systems. They may also be applied as a basis for high precision clocks as used, for example, on board of satellites to establish a positioning system.

In the context of this disclosure, a laser system is considered to have a stable frequency if the frequency fluctuation of its optical output, e.g., in terms of the variation df of the frequency f of the optical output, amounts to 10⁻¹² times the frequency f or less, i.e., df/f ≤ 10⁻¹². Herein, the frequency f, and hence the optical output, is not necessarily in the visible part of the electromagnetic spectrum, but may correspond to a frequency in the infrared or in the ultraviolet spectral range.

For example, the variation df of the frequency may refer to a variation measured on a time scale of 1 s. The stability df/f on the 1 s-timescale will also be referred to as the short-term stability. In the context of this disclosure, a laser system with a short-term stability of df/f ≤ 10⁻¹⁵ is also referred to as an ultrastable laser system.

Ultrastable laser systems allow for a particularly precise control of quantum systems, directly or via the implementation of microwave sources with very low noise levels. Hence, they have the potential to form the core of future quantum computers, quantum sensors, and quantum networks. Moreover, they may form the basis for high precision time measurement systems and for position measurement systems based on a stable time reference, such as a radar or lidar system or a satellite-based navigation system. In the latter, the precision of the clock on board of the satellite is directly related to the precision of the position measurement.

One approach to implement an ultrastable laser system applies an optical resonator, sometimes also referred to as an optical cavity or as a Fabry-Perot resonator. An optical input of the optical resonator is provided by a laser beam taken from the optical output of the laser system to be stabilized. The laser beam is detected after its interaction with the optical resonator, e.g., by measuring the power of the laser beam. As the optical properties (such as reflectivity or transmittance) of the resonator are strongly frequency dependent, any change in the frequency of the optical output of the laser system results in a significant change of the measured power of the detected laser beam. When such a change is detected, the laser system is readjusted, such that the initially measured power of the detected laser beam is restored.

This approach has proven to allow for implementing an ultrastable laser system, see, e.g., Ludlow, A.D., Boyd, M.M., Ye, J., Peik, E., Schmidt, P.O. "Optical atomic clocks," Rev. Mod. Phys. 87, 637-701 (2015), where experiments are summarized in which an optical resonator made from ultra-low expansion glass is used, which is kept at room temperature.

The precision of such a system is typically limited by the mechanical stability of the optical resonator. Any change of the optical resonator results in an undesirable change of the optical properties of the optical resonator, i.e. of its frequency dependence, and negatively affects the performance of the resonator for the frequency stabilization.

### OVERVIEW

In view of the technical problems laid out above, there is a need for improvements related to stabilizing a frequency of an optical output of a laser system. This objective is achieved with an apparatus according to claim 1 and a method according to claim 14. The dependent claims refer to advantageous embodiments.

A first aspect relates to an apparatus for providing a control signal for stabilizing a frequency of an optical output of a laser system. The apparatus comprises an optical resonator, a doped material arranged in the optical resonator, and a thermal insulation system. The doped material comprises a matrix doped with a rare-earth element. The thermal insulation system is adapted to thermally insulate the optical resonator from an environment outside of the thermal insulation system. The apparatus is adapted to provide the control signal based on an optical signal from the resonator when an optical input is provided to the resonator. The control signal is associated with a length of the optical resonator and/or with a refractive index of the doped material.

The apparatus according to the invention uses the optical resonator to provide a high precision control signal. This technique has proven to be able to implement an ultrastable laser system, providing more stable control signals than alternative approaches without a resonator. To achieve the high precision of the control signal, the apparatus makes use of the fact that any minor change in the laser frequency results in a significant change in the control signal, providing an enhanced sensitivity as compared to an apparatus without an optical resonator.

Moreover, the apparatus according to this description with the thermal insulation system allows for cooling the optical resonator, thus reducing thermal noise associated with the optical resonator, for example in its mirror coatings or in the resonator length, and thus overcomes problems of the state of the art, wherein the thermal noise limits the performance during frequency stabilization.

The apparatus according to the invention improves the precision of the provided control signal. In other words, it provides a control signal with an improved stability, or with a reduced noise, respectively. This is achieved using various effects, which synergistically interact to improve the stability. In detail:
The resonator of the respective apparatus allows for spectral hole burning in the doped material thereof. Spectral hole burning renders the medium, which is subject to the spectral hole burning, at least partially transparent within a narrow spectral range. This gives rise to a strong frequency dependence of the optical properties of the material subject to the spectral hole burning, i.e., stronger than in the same material when it is not subject to spectral hole burning, and also stronger than in materials which are not suitable for spectral hole burning. The strong frequency dependence results in a small group velocity v' of light in the material subject to the spectral hole burning, i.e., smaller than the group velocity of light in the same material when it is not subject to spectral hole burning, and also smaller than in materials which are not suitable for spectral hole burning. The small group velocity v' may not only be characterized by its relative value as compared to the material without being subject to spectral hole burning, but it may also or alternatively be defined by a value of 1/10 or less of the speed of light v in vacuum, i.e., v' ≤ v/10.

In other words, the optical resonator of the apparatus according to the invention allows for a small group velocity v' ≤ v/10 therein. Light with such a small group velocity v' is also referred to as slow light in the context of the invention.

In yet other words, the optical resonator of the apparatus according to the invention is able to support slow light therein. The small group velocity v', or the slow light, respectively, is enabled by the doped material of the optical resonator, which comprises a matrix doped with a rare-earth element.

As an immediate consequence of this small group velocity v', or of the matrix doped with a rare-earth element, respectively, the optical resonator may be formed with a reduced length. The relative length reduction (e.g., as compared to a conventional optical resonator) corresponds to the ratio between the group velocity v" in a conventional resonator, such as the resonator formed from ultra-low-expansion glass, and the group velocity v' in the optical resonator of the apparatus according to the invention. It typically amounts to at least 3 or at least 10; a reduction by a factor of 500 is readily achievable with doped materials known from the prior art.

The reduced length of the resonator results in a reduced sensitivity to perturbations and noise and thus in an improved stability of the provided control signal.

Moreover, comprising the thermal insulation system, the apparatus according to the invention allows for cooling the optical resonator and the doped material therein to a cryogenic temperature. The cryogenic temperature may refer to a temperature below 70 K or below 40 K or below 20 K or below 10 K or below 5 K. The cryogenic temperature of the optical resonator does not only reduce the thermal noise to the length of the resonator and therefore improve the mechanical stability of the optical resonator, but also stabilizes the small group velocity v', or the slow light, respectively, achieved by the spectral hole burning. After the spectral hole burning, the doped material will recover its original state, i.e., without the burnt spectral hole, over time. Due to the cooling, the recovery occurs more slowly, and, consequently, the small group velocity v' changes more slowly, and the resulting control signal is more stable. Moreover, as the thermal insulation system allows for maintaining the small group velocity v' for a longer period of time, the time interval until the spectral hole burning needs to be repeated to maintain the small group velocity v' is extended. For most materials known from the prior art, cooling the optical resonator to a temperature below 10 K or 5 K is particularly beneficially, since it allows for burning the spectral hole with a moderate excitation power, reducing the technical complexity and the cost of the optical excitation system for burning the spectral hole. In addition, the width of the spectral holes will be narrower at lower temperature. This allows for achieving a larger group index, and thus improves the long-term stability of the control signal.

Moreover, the apparatus is compact because of the reduced length of the resonator. This allows for the integration of the apparatus in high-integration-density systems such as photonic integrated circuits or in systems which provide a limited space or limited mass, such as satellites.

The apparatus is also cost-efficient, as the technical requirements to the resonator (apart from the need for the doped material) are lifted. The resonator of the apparatus according to this disclosure may be fabricated with a smaller quality factor as compared to a resonator conventionally employed for stabilizing an ultrastable laser system. The reduced length of the resonator reduces the cost of the apparatus. The material of the matrix may be selected from a large variety of materials, including, but not limited to highly crystalline silicon or single-crystal silicon, allowing for a further reduced cost of manufacture.

The apparatus may comprise the laser system.

According to some embodiments, the laser system is adapted to, for stabilizing the frequency of the optical output of the laser system, receive the control signal.

According to some embodiments, the laser system is adapted to adjust the frequency of the optical output of the laser system in response to the control signal.

The laser system may be adapted to provide the optical input to the resonator, in particular from the optical output of the laser system.

The laser system may comprise a laser.

The laser system may comprise an optical modulation element.

The laser system may be adapted to provide the optical output modulated by the modulation element. The modulation element may comprise an electro-optical modulator and/or an acousto-optical modulator.

Respective optical modulation elements provide efficient means for implementing the stabilization of the frequency of the laser system.

The doped material may be adapted for spectral-hole burning therein.

The doped material may be adapted to provide a group velocity v' of light therein which is at least ten times smaller than the speed of light v in vacuum.

The rare-earth element may be erbium, thulium or praseodymium.

Erbium, thulium or praseodymium advantageously provides an emission line with a wavelength in a telecommunication wavelength band, (i.e., in the L band (1565-1625 nm), in the C band (1530-1565 nm), in the U band (1625-1675 nm) and/or in the O-band (1260-1360 nm)), which are efficiently transmitted through commercially available optical fibers such as the ones used in telecommunication applications.

The matrix may be a transparent matrix, for example at the frequency of the optical output of the laser system.

The apparatus may be adapted to burn a spectral hole into the doped material and/or to cause a group velocity v' of light in the doped material which is at least ten times smaller than the speed of light v in vacuum.

Optionally, the apparatus may comprise an optical excitation system adapted to burn the spectral hole into the doped material. The optical excitation system may alternatively or in addition be adapted to cause a group velocity of light v' in the doped material which is at least ten times smaller than the speed of light v in vacuum.

The optical excitation system may use an optical output of the laser system to burn the spectral hole into the doped material and/or to cause a group velocity v' of light in the doped material which is at least ten times smaller than the speed of light v in vacuum.

In such embodiments, the optical excitation system makes use of the laser system present in the apparatus. A need for an additional optical excitation system is lifted, making the apparatus cost-efficient.

The matrix may be an optical fiber. In such embodiments, the optical fiber may provide the optical resonator.

The matrix may comprise or may be composed of silicon, lithium niobate, silicon nitride, silicon oxide or glass.An optical fiber provides a cost-efficient system to implement the optical resonator. Moreover, embodiments wherein the matrix is an optical fiber are particularly suitable for in-line integration with optical fibers as commonly used in communication technology, for example with optical fibers which transmit light with a wavelength in the telecommunications wavelength bands, and/or for stabilizing a laser system which emits light at a respective wavelength.

Moreover, the bending radius and the cladding of the optical fiber may be selected to tune the optical properties of the optical fiber, in particular, such that the temperature-dependence of the optical properties of the optical fiber is minimized under the working conditions. This further improves the thermal stability of the apparatus.

The optical resonator may be a ring resonator. Alternatively, the optical resonator may be formed by periodic modulations of the refractive index of the optical fiber, and/or by fiber Bragg gratings.

In respective embodiments, the matrix may comprise or be composed of silicon oxide or glass.

The matrix may be at least a part of a photonic integrated circuit. The photonic integrated circuit may provide the optical resonator.

The matrix may comprise or may be composed of a semiconductor, in particular silicon.

The matrix may comprise or may be composed of an insulator or a dielectric arranged over/on a semiconductor substrate of a photonic integrated circuit.

Alternatively, or in addition, the matrix may comprise or may be composed of an insulator or a dielectric arranged below a semiconductor thin film or a nanostructure, in particular of a photonic integrated circuit.

Respective embodiments allow for the cointegration of the optical resonator, and/or the apparatus, respectively, with other components of the photonic integrated circuit at high integration density.

Moreover, the photonic integrated circuit may be fabricated with a high mechanical precision making use of techniques established in semiconductor technology.

In some embodiments, the control signal is an optical signal.

In other embodiments, the control signal comprises or is an electronic signal.

Respective control signals may readily be processed by a laser system receiving them.

The apparatus may further comprise a control signal generator adapted to receive the optical signal from the resonator and to generate the control signal based on the optical signal, for example based on an intensity and/or on a power and/or on a phase of the optical signal.

The control signal generator may be adapted to receive an additional optical signal from the laser system and to generate the control signal based on the optical signal and on the additional optical signal.

Respective embodiments provide an improved stability of the control signal.

The apparatus may be adapted to provide the additional optical signal to the control signal generator without any interaction of the additional optical signal with the optical resonator before the additional optical signal is received by the control signal generator.

The apparatus may further comprise a cooling system adapted to cool the optical resonator.

Cooling the optical resonator further promotes the advantages described above in the context of the thermal insulation system.

The cooling system may be adapted to cool the resonator to a temperature below a first temperature, wherein the first temperature is 70 K or 40 K or 20 K or 10 K or 5 K.

The resonator of the apparatus according to this disclosure is advantageously suitable for operation at the respective temperatures, which are also referred to as cryogenic temperatures in the context of this disclosure. The operation at such cryogenic temperatures, which are below the operation temperature of a conventional resonator-based apparatus for stabilizing the frequency of laser systems, reduces thermal noise affecting the length of the optical resonator and hence improves the stability of the control signal.

The cooling system may comprise a first section arranged inside of the thermal insulation system, a second section arranged outside of the thermal insulation system, and an intermediate section thermally connecting the first section of the cooling system and the second section of the cooling system.

The cooling system may comprise a pump adapted to drive a flow of liquid helium, and the pump may be arranged outside of the thermal insulation system, or the pump may be comprised in the second section of the cooling system.

Pumping helium reduces the temperature of the optical resonator and hence improves the stability of the resonator and of the control signal. Arranging the pump outside of the thermal insulation system reduces mechanical vibrations of the optical resonator and therefore further improves the stability of the control signal.

The thermal insulation system may comprise or may be a vacuum vessel.

The thermal insulation system may comprise or may be a containment adapted to enclose helium.

The optical resonator may be arranged inside the thermal insulation system.

The thermal insulation system may comprise liquid helium, such as in a first section of the thermal insulation system. The first section of the thermal insulation system may be arranged in a vicinity of the optical resonator and/or at a first distance from the optical resonator.

The thermal insulation system may enclose a vacuum, for example at a pressure of < 1 mbar or < 0.1 mbar or < 0.01 mbar or < 0.001 mbar.

The thermal insulation system may comprise helium gas, such as in a second section of the thermal insulation system.

The optical resonator may be arranged in the second section of the thermal insulation system and/or in physical contact with the second section of the thermal insulation system.

The first distance between the first section of the thermal insulation system and the optical resonator may exceed a second distance between the second section of the thermal insulation system and the optical resonator.

The second section of the thermal insulation system may be arranged between the optical resonator and the first section of the thermal insulation system.

In respective embodiments, the helium gas separates the resonator from the liquid helium. It thus provides an exchange gas to exchange heat between the liquid helium and the optical resonator and ensures efficient cooling of the optical resonator. In a conventional apparatus without a separation between the resonator and the liquid helium, mechanical movements of the liquid helium, e.g. related to the formation of bubbles or pressure waves in a closed-cycle cryocooler, may be transmitted to the optical resonator and may cause undesired vibrations of the optical resonator, affecting its stability. The separation provided by the helium gas avoids this problem and thus improves the mechanical stability of the optical resonator.

The thermal insulation system and/or the second section of the thermal insulation system may comprise the helium gas at a pressure or a partial pressure of at least 0.01 mbar or of at least 0.1 mbar or of at least 1 mbar.

The optical resonator may be adapted to provide a round-trip loss of at least 0.1% or of at least 0.5% or of at least 1% or of at least 2%.

In alternative embodiments, the optical resonator may be adapted to provide a round-trip loss of at most 0.1% or of at most 0.5% or of at most 1% or of at most 2%.

The optical resonator may comprise reflective end elements. A reflectivity of at least one of the reflective end elements or the reflectivities of at least two of the reflective end elements may be at most 0.999 or at most 0.995 or at most 0.99 or at most 0.98.

In alternative embodiments, the optical resonator may comprise reflective end elements. A reflectivity of at least one of the reflective end elements or the reflectivities of at least two of the reflective end elements may be at most 0.999 or at most 0.995 or at most 0.99 or at most 0.98.

The apparatus allows the use of respective optical resonators with smaller Q factors than conventional optical resonators, reducing the cost and/or size of the optical resonator and of the apparatus.

The apparatus may further comprise a mechanical-vibration reduction system adapted to reduce a mechanical vibration of the optical resonator.

For example, the mechanical-vibration reduction system may be adapted to reduce a mechanical vibration of the optical resonator in terms of the length of the resonator and/or a mechanical vibration of the optical resonator that would lead to a refractive index change of the optical resonator and/or a mechanical vibration of the optical resonator with respect to the thermal insulation system.

A respective mechanical-vibration reduction system improves the mechanical stability of the optical resonator and hence the stability of the provided control signal.

The mechanical-vibration reduction system may be arranged inside the thermal insulation system, preferably at least in part or in its entirety.

The mechanical-vibration reduction system may comprise a passive mechanical-vibration reduction element.

Alternatively, or in addition, the mechanical-vibration reduction system may comprise a mechanical-vibration decoupling element mechanically connecting the optical resonator to the thermal insulation system, and providing an eigenfrequency for vibrationally decoupling the optical resonator from the thermal insulation system at a frequency above the eigenfrequency of the respective mechanical-vibration decoupling element, in particular, when its temperature is above 200 K or above 120 K or above 70 K or above 40 K or above 10 K, but not when its temperature is below 70 K or below 40 K or below 10 K.

The eigenfrequency may be 2 Hz or less or 5 Hz or less or 10 Hz or less or 15 Hz or less.

Alternatively, or in addition, the mechanical-vibration reduction system may comprise a mechanical-vibration damping element adapted to attenuate the mechanical vibration of the optical resonator using friction, in particular, when its temperature is above 200 K or above 120 K or above 70 K or above 40 K or above 10 K, but not when its temperature is below 70 K or below 40 K or below 20 K or below 10 K.

Alternatively, or in addition, the mechanical-vibration reduction system may comprise a mechanical-vibration damping element without a need for an energy supply external to the mechanical-vibration damping element.

Any of the passive mechanical-vibration reduction element, the mechanical-vibration decoupling element and/or the mechanical-vibration damping element may comprise or may be composed of an elastomer.

The elastomer may comprise or may be composed of rubber, caoutchouc, or viton. Alternatively, the elastomer may comprise or may be composed of NewDamp elastomer available from Newport Corporation.

Any of the passive mechanical-vibration reduction element, the mechanical-vibration decoupling element and/or the mechanical-vibration damping element may comprise a lubricant such as a grease or an oil such as a gear oil, or may be adapted to use viscous damping to reduce the mechanical vibration of the optical resonator.

The mechanical-vibration reduction system may comprise an active mechanical-vibration reduction element and/or a mechanical-vibration reduction element adapted to actively counteract the mechanical vibration of the optical resonator and/or the mechanical-vibration reduction system may comprise a mechanical-vibration reduction element adapted to receive energy from an energy supply external to the mechanical-vibration reduction element. The active mechanical-vibration reduction element may be operable when its temperature is above 200 K or above 120 K or above 70 K or above 40 K or above 10 K, but not may not be operable when its temperature is below 70 K or below 40 K or below 10 K

The mechanical-vibration reduction system may comprise a first portion mechanically coupled to the optical resonator and a second portion. The apparatus may be adapted to provide a first temperature of the first portion of the mechanical-vibration reduction system below a second temperature of the second portion of the mechanical-vibration reduction system.

A higher temperature of the second portion of the mechanical-vibration reduction system as compared to the first portion of the mechanical vibration system coupled to the optical resonator permits to use a variety of materials for the second portion of the mechanical-vibration reduction system. In particular, when the optical resonator is at a cryogenic temperature, the respective material may be at a higher temperature, which is not cryogenic. Consequently, material restrictions that would apply to a mechanical-vibration reduction system kept at a cryogenic temperature are lifted and materials which would not be suitable for cryogenic temperatures, such as fluorocarbon-based fluoroelastomer materials, may be used. Respective materials provide improved vibration damping properties and are available at a reduced cost as compared to materials suitable for cryogenic temperatures.

The second portion of the mechanical-vibration reduction system may be mechanically coupled to the thermal insulation system and/or may be in physical contact with the thermal insulation system.

The optical resonator may be mechanically connected to the thermal insulation system via the first portion and the second portion of the mechanical-vibration reduction system.

The second portion of the mechanical-vibration reduction system may be thermally coupled to the environment outside of the thermal insulation system.

The first portion of the mechanical-vibration reduction system and/or the second portion of the mechanical-vibration reduction system may be arranged inside the thermal insulation system.

A distance between the second portion of the mechanical-vibration reduction system and the optical resonator may exceed a distance between the first portion of the mechanical-vibration reduction system and the optical resonator.

The first portion of the mechanical-vibration reduction system may be arranged between the optical resonator and the second portion of the mechanical-vibration reduction system.

The second portion of the mechanical-vibration reduction system may be arranged between the first portion of the mechanical-vibration reduction system and the thermal insulation system.

Respective embodiments advantageously support the higher temperature of the second portion of the mechanical-vibration reduction system as compared to the first portion of the mechanical vibration system coupled to the optical resonator.

Notably, the mechanical-vibration reduction system may also be provided in a device not comprising all features of the apparatus described above. For example, the mechanical-vibration reduction system may be provided in combination with the thermal insulation system as a thermal and vibrational insulation system. Such a thermal and vibrational insulation system may beneficially be applied to a wide variety of devices, i.e., not limited to optical resonators, for an improved thermal and vibrational insulation of the respective device from the environment.

The mechanical-vibration reduction system may comprise a cylindrical body adapted to mechanically support an optical fiber arranged around a surface of the cylindrical body.

The cylindrical body may comprise a groove arranged between the respective surface of the cylindrical body and a center line or an axis of the cylindrical body.

An optical fiber or a first segment of the optical fiber may be arranged around the surface of the cylindrical body and may form the optical resonator or at least a section of the optical resonator.

A first section of the optical fiber or of the first segment of the optical fiber may be wound around the cylindrical body with a first winding direction. A second section of the optical fiber or of the first segment of the optical fiber may be wound around the cylindrical body and around the first section of the optical fiber or of the first segment of the optical fiber with a second winding direction opposite to the first winding direction.

The mechanical-vibration reduction system may comprise an additional cylindrical body adapted to mechanically support an optical fiber arranged around a second surface of the additional cylindrical body. A second optical fiber or a second segment of the optical fiber may be arranged around the second surface and may form a different section of the optical resonator.

In respective embodiments, mechanical vibrations of the optical resonator are further reduced, further improving the stability of the provided control signal, in particular when used with an optical fiber as the optical resonator.

Another aspect relates to a method to provide a control signal for stabilizing a frequency of an optical output of a laser system. The method comprises cooling an optical resonator to a temperature below a first temperature. The first temperature is 70 K. A doped material is arranged in the optical resonator. The doped material comprises a matrix doped with a rare earth element. The method further comprises providing an optical input to the cooled optical resonator, generating the control signal based on an optical signal from the optical resonator; and providing the control signal to the laser system for frequency stabilizing the optical output of the laser system.

Another aspect relates to a method to provide a control signal for stabilizing a frequency of an optical output of a laser system. The method comprises providing an optical resonator in a thermal insulation system, such that a first portion of a mechanical-vibration reduction system is mechanically coupled to the optical resonator and a second portion of the mechanical-vibration reduction system is mechanically coupled to the thermal insulation system and that the optical resonator is mechanically connected to the thermal insulation system via the first portion and the second portion of the mechanical-vibration reduction system. The method comprises cooling an optical resonator and the first portion of the mechanical-vibration reduction system to a temperature below a first temperature. The first temperature is 70 K. The method further comprises providing an optical input to the cooled optical resonator while keeping a second temperature of the second portion of the mechanical-vibration reduction system above 70 K. The method further comprises generating the control signal based on an optical signal from the optical resonator; and providing the control signal to the laser system for stabilizing the frequency of the optical output of the laser system.

A doped material may be arranged in the optical resonator. The doped material may comprise a matrix doped with a rare-earth element.

The following modifications may be made to the method according to either of the aspects described above:
The method may comprise adjusting the frequency of the optical output of the laser system in response to the control signal.

The control signal may be associated with a length of the optical resonator and/or with a refractive index of the doped material.

The control signal may be generated based on the optical signal and on an additional optical signal from the laser system.

The control signal may be generated based on the optical signal and an additional optical signal from the laser system which has not interacted with the optical resonator.

The method may further comprise, before and/or while providing the optical input to the cooled optical resonator: Burning a spectral hole into the doped material in the cooled optical resonator; and/or causing a group velocity v'of light in the doped material in the cooled optical resonator, wherein said group velocity v' of light is at least ten times smaller than the speed of light v in vacuum.

The first temperature may be 40 K or 10 K or 5 K.

According to another aspect, a thermal and vibrational insulation system is suitable for thermally and vibrationally insulating an optical resonator from an environment. The thermal and vibrational insulation system comprises a body comprising a receptacle for receiving the optical resonator; a mechanical-vibration reduction system adapted to reduce a mechanical vibration of the receptacle; and a thermal insulation system adapted to thermally insulate the receptacle from the environment. The environment refers to an environment outside of the thermal insulation system. The body comprising the receptacle and the mechanical-vibration reduction system are arranged in the thermal insulation system. The mechanical-vibration reduction system comprises a first portion mechanically coupled to the body comprising the receptacle and a second portion mechanically coupled to the thermal insulation system. The body comprising the receptacle is mechanically connected to the thermal insulation system via the first portion and the second portion of the mechanical-vibration reduction system. The second portion of the mechanical-vibration reduction system comprises a mechanical-vibration reduction element comprising an elastomer. Alternatively, or in addition, the second portion of the mechanical-vibration reduction system comprises a mechanical-vibration reduction element operable to reduce the mechanical vibration of the body comprising the receptacle when the temperature of the mechanical-vibration reduction element is above 200 K, but not operable to reduce the mechanical vibration of the body comprising the receptacle when the temperature of the mechanical-vibration reduction element is below 20 K.

In alternative embodiments, said mechanical-vibration reduction element may be operable to reduce the mechanical vibration of the body comprising the receptacle when the temperature of the mechanical-vibration reduction element is above 120 K, but the mechanical-vibration reduction element may not be operable to reduce the mechanical vibration of the body comprising the receptacle when the temperature of the mechanical-vibration reduction element is below 20 K.

In alternative embodiments, said mechanical-vibration reduction element may be operable to reduce the mechanical vibration of the body comprising the receptacle when the temperature of the mechanical-vibration reduction element is above 200 K, but the mechanical-vibration reduction element may not be operable to reduce the mechanical vibration of the body comprising the receptacle when the temperature of the mechanical-vibration reduction element is below 40 K.

The mechanical-vibration reduction element may comprise or may be a passive mechanical-vibration reduction element and/or a mechanical-vibration decoupling element and/or a mechanical-vibration damping element and/or an active mechanical-vibration reduction element as described above.

Any or all of the mechanical-vibration reduction/decoupling/damping element(s) may be composed of an elastomer.

The elastomer may comprise or may be composed of rubber, caoutchouc, or viton. Alternatively, the elastomer may comprise or may be composed of NewDamp elastomer available from Newport Corporation.

Any or all of the mechanical-vibration reduction/decoupling/damping element(s) may comprise a lubricant such as a grease or an oil such as a gear oil, or may be adapted to use viscous damping to reduce a mechanical vibration of the body comprising the receptacle.

The thermal and vibrational insulation system may comprise an optical resonator arranged in the receptacle. In corresponding embodiments, a doped material may be arranged in the optical resonator, wherein the doped material comprises a matrix doped with a rare-earth element. Alternatively, or in addition, the optical resonator may exhibit one or all features described above in the context of the first aspect.

Another aspect relates to a method of operating the thermal and vibrational insulation system described above. The method comprises controlling a temperature of the first portion of the mechanical-vibration reduction system to a temperature below 40 K or below 20 K or below 10 K or below 5 K. The method comprises controlling a temperature of the second portion of the mechanical-vibration reduction system to a temperature above 200 K or above 120 K or above 70 K or above 40 K.

For example, the temperature of the first portion may be controlled to below 20 K, and the temperature of the second portion may be controlled to above 40; or the temperature of the first portion may be controlled to below 20 K, and the temperature of the second portion may be controlled to above 120 K; or the temperature of the first portion may be controlled to below 20 K, and the temperature of the second portion may be controlled to above 200 K; or the temperature of the first portion may be controlled to below 70 K, and the temperature of the second portion may be controlled to above 120 K.

### BRIEF DESCRIPTION OF THE FIGURES

The techniques of the present disclosure and the advantages associated therewith will be best apparent from a description of exemplary embodiments in accordance with the accompanying drawings, in which:
Fig. 1, Fig. 2, Fig. 3 give schematic illustrations of the apparatus according to different embodiments;
Fig. 4a - Fig. 4c illustrate optical resonators according to examples;
Fig. 5 - Fig. 9a give schematic illustrations of the apparatus according to other embodiments;
Fig. 9b gives a schematic illustration of a thermal and vibrational insulation system according to an embodiment;
Fig. 10 gives a schematic illustration of the apparatus according to another embodiment;
Fig. 11, Fig. 12 show cross sections of cylindrical bodies of the mechanical-vibration reduction system; and
Fig. 13 illustrates a method to provide a control signal for stabilizing a frequency of an optical output of a laser system according to an embodiment.

### DETAILED DESCRIPTION OF EMBODIMENTS

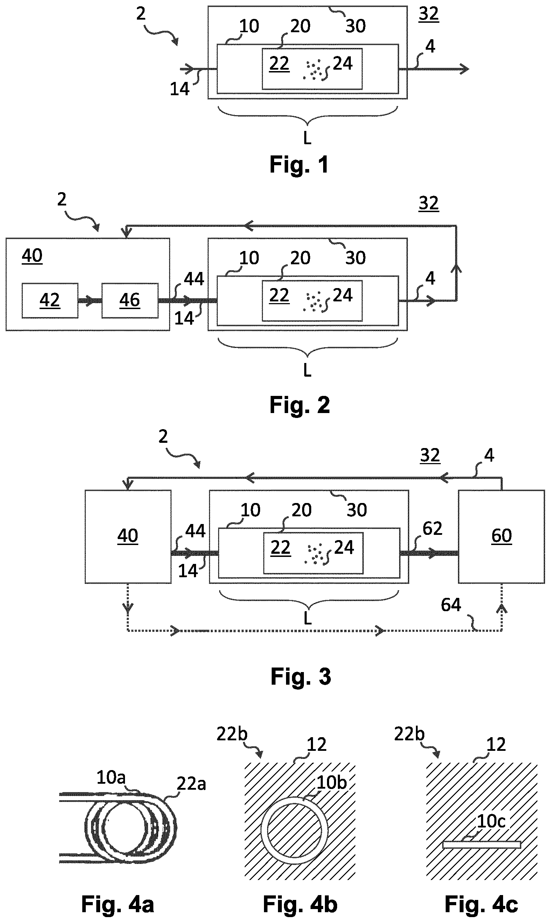

Fig. 1 gives a schematic illustration of an apparatus 2 according to an embodiment.

The apparatus 2 comprises an optical resonator 10, for example in the form of a ring resonator 10b or a linear resonator 10a, 10c as will be laid out in more detail below in the context of Fig. 4a, Fig. 4b, and Fig. 4c. According to exemplary embodiments, the optical resonator 10, 10a, 10b, 10c is formed from an optical fiber 22a serving as a matrix 22, or from a structure of a semiconductor material of a photonic integrated circuit 22b serving as the matrix 22, as will also be laid out in more detail in the context of Fig. 4a, Fig. 4b, and Fig. 4c. This matrix 22 is doped with a rare-earth element 24. In the depicted embodiment, the rare-earth element 24 is erbium.

The optical resonator 10, 10a, 10b, 10c is enclosed in a thermal insulation system 30 suitable to maintain a cryogenic temperature of the optical resonator 10, in particular while the outside 32 of the thermal insulation system 30 is at room temperature (20°C). In the exemplary embodiment, the thermal insulation system 30 is a vacuum vessel 30 suitable for containing helium gas. In the context of this disclosure, the term cryogenic temperature may refer to a temperature below 70 K or below 40 K or below 20 K or below 10 K.

During operation, an optical input 14 in the form of a laser beam 14 is provided to the optical resonator 10, 10a, 10b, 10c.

When the laser beam 14 is provided to the optical resonator 10, 10a, 10b, 10c of the apparatus 2 as the optical input 14, the apparatus 2 provides a control signal 4. In one embodiment, the control signal 4 is an optical signal 62 from the optical resonator 10, such as a portion of the laser beam 14 which is reflected off the optical resonator 10, 10a, 10b, 10c and/or scattered from the optical resonator 10, 10a, 10b, 10c or transmitted through the optical resonator 10, 10a, 10b, 10c. When the length L of the optical resonator 10, 10a, 10b, 10c or the refractive index of the doped matrix 22 changes, this has a strong influence on the optical properties of the optical resonator 10, 10a, 10b, 10c and hence on the optical signal 62, for example on its intensity or its power or its phase. Consequently, the control signal 4 provided in the form of the optical signal 62 is associated with the length L (also referred to as the physical length L in the context of this disclosure) of the optical resonator 10, 10a, 10b, 10c.

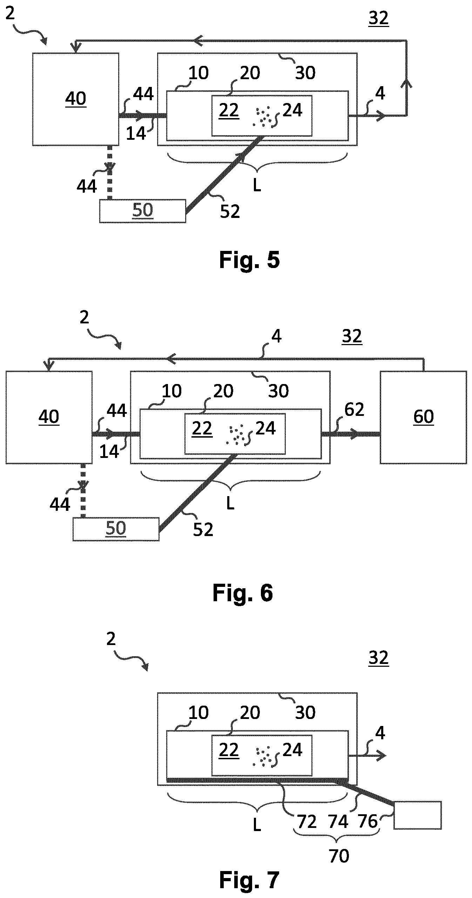

In some embodiments, the optical signal 62 from the optical resonator 10, 10a, 10b, 10c is not directly used as the control signal 4, but is processed further to generate the control signal 4, for example as an electronic signal 4, as will be laid out in detail in the context of Fig. 5.

By applying a sufficiently intense optical excitation 52 to the matrix 22 doped with the rare-earth element 24, a spectral hole can be generated in the optical absorption spectrum of the matrix 22 doped with the rare-earth element 24. The spectral hole gives rise to a strong dispersion in a narrow spectral range around the spectral hole, i.e., around the wavelength of the optical excitation 52. Consequently, the group velocity v' of light in this narrow spectral range is reduced, e.g. to a value of 1/10 of the speed of light v in vacuum or less. Respective light is also referred to as slow light in the context of the current disclosure. A reduction of the group velocity v' by a factor of 1/1000 (i.e., compared to the speed of light v in vacuum) is readily achievable using established techniques.

As a consequence of the spectral hole and the reduced group velocity v', the physical length L (also referred to briefly as the length L) of the optical resonator 10, 10a, 10b, 10c needed to achieve a desired or preselected optical length l is reduced by the same factor. The desired or preselected optical length l is typically dictated by the specific application example, i.e., by the laser system that the apparatus 2 is supposed to be used with, such as by the optical frequency this laser system emits. Because of the potential of the matrix 22 doped with the rare-earth element 24 for spectral hole burning, the optical resonator 10, 10a, 10b, 10c according to the disclosure may be significantly shorter for a given application example than a conventional optical resonator. For many applications, the physical length L of the optical resonator 10, 10a, 10b, 10c may be reduced to a few millimeters. For some applications, it may be reduced to few micrometers.

This has several advantages: Because of the reduced length L, the optical resonator 10, 10a, 10b, 10c is particularly suitable for implementation into a photonic integrated circuit. In alternative embodiments, wherein a fiber oscillator 22a is used as the optical resonator 10, 10a, 10b, 10c, the amount/length of optical fiber needed is reduced, making the apparatus 2 more compact and cost-efficient.

Independent of the specific implementation of the matrix 22 with the rare-earth element 24, the reduction in length L by a given factor results in a reduction of the sensitivity of the control signal 4 to mechanical and/or thermal fluctuations (i.e., to fluctuations in the length and/or temperature of the optical resonator 10, 10a, 10b, 10c) by the same factor. Hence, the control signal 4 of the apparatus 2 is significantly more stable than a conventional system in the presence of mechanical and/or thermal fluctuations.

Fig. 2 illustrates an apparatus 2 which further comprises the laser system 40.

The laser system 40 provides an optical output 44. The optical output 44 is not necessarily in the visible part of the electromagnetic spectrum, but may correspond to a frequency in the infrared or in the ultraviolet spectral range.

At least a portion of the optical output 44 of the laser system 40 is provided as an optical input 14 to the apparatus 2, or to the optical resonator 10, 10a, 10b, 10c, respectively. In some embodiments, part of the optical output 44 of the laser system 40 is not introduced into the optical resonator 10, 10a, 10b, 10c, but may be used for a different purpose such as for generating the control signal 4 and/or for the spectral hole burning.

As depicted in Fig. 2, the control signal 4 is provided to the laser system 40. The frequency of the optical output 44 of the laser system 40 is adjusted in response to the control signal 4.

As laid out above, the control signal 4 may be provided as an optical signal 4. In such embodiments, an electrical control signal may be generated based on the optical signal 4 by the laser system 40.

In some embodiments, the optical signal 62 is processed to generate an electronic signal 4 which is provided to the laser system 40 as the control signal 4.

In the depicted embodiment, the laser system 40 comprises a laser 42 and an optical modulation element 46. In the depicted embodiment, the optical modulation element 46 is formed by an acousto-optical modulator 46 and an electro-optical modulator 46 that a laser beam of the laser system 40 passes through successively to form the optical output 44. In some embodiments, more or less modulators 46 may be present, or the laser system 40 may not comprise a modulator 46 at all.

In the depicted embodiment, the acousto-optical modulator 46 is adjusted according to the control signal 4 to adjust the frequency of the laser system 40. However, this is only an example of a laser system 40 with a frequency-adjustable optical output 44. Alternative laser systems 40 with frequency-adjustable optical outputs 44 are well known from the prior art. The apparatus 2 of the invention may be used with any of those, or it may comprise any of those as the laser system 40.

Fig. 3 depicts an embodiment similar to the one of Fig. 2. However, the apparatus 2 according to the embodiment of Fig. 3 comprises a control signal generator 60.

The control signal generator 60 receives the optical signal 62 from the optical resonator 10, 10a, 10b, 10c and generates the control signal 4 based thereon.

In some embodiments, the control signal generator 60 is a light sensor, such as a photodiode, to generate the electronic control signal 4 from the optical signal 62. In such embodiments, the additional optical signal 64 depicted in Fig. 3 is not needed and may not be present.

In a preferred embodiment, the control signal generator 60 receives an additional optical signal 64 from the laser system 40, in addition to receiving an optical signal 62 from the optical resonator 10, 10a, 10b, 10c. For example, a portion of the optical output 44 of the laser system 40 is received at the control signal generator 60 as the additional optical signal 64. The additional optical signal 64, in contrast to the optical signal 62, has not interacted with the optical resonator 10, 10a, 10b, 10c.

In such embodiments, the control signal generator 60 generates the control signal 4 from the optical signal 62 from the optical resonator 10, 10a, 10b, 10c and from the additional optical signal 64. For this purpose, the control signal generator 60 uses a technique known from the prior art, such as the Pound-Drever-Hall technique or the Hänsch-Couillaud method.

In the depicted embodiment, the control signal generator 60 generates an electronic control signal 4 from the optical signal 62 and the additional optical signal 64. However, the control signal 4 generated from the optical signal 62 from the optical resonator 10, 10a, 10b, 10c and from the additional optical signal 64 is provided as an optical control signal 4 in some embodiments.

Fig 4a, Fig. 4b, and Fig. 4c show the optical resonator 10, 10a, 10b, 10c according to different embodiments.

According to the embodiment of Fig. 4a, the optical resonator 10a is a fiber oscillator 10a formed by an optical fiber 22a doped with the rare-earth element 24 (not shown in the figure). The fiber resonator 10a may be considered a linear resonator 10a, as the ends of the fiber 22a form or comprise the end mirrors of the optical resonator 10a. Typically, the fiber 22a comprises a coating or a Fiber Bragg grating at its ends to enhance the reflectivity of the respective end mirrors.

The fiber resonator 10a has the advantage that it is compatible with established technology, such as fiber technology used in telecommunications applications. In particular, when the rare-earth element 24 is erbium, the optical resonator 10a is operable at the established telecommunication wavelength around 1.54 µm. In alternative embodiments, thulium or praseodymium is used as the rare-earth element to provide an emission line in an alternative telecommunication wavelength band (i.e., in the L band (1565-1625 nm), in the C band (1530-1565 nm), in the U band (1625-1675 nm) or in the O-band (1260-1360 nm)).

Moreover, the fiber 22a may be tuned, for example by selecting a proper cladding and selecting a proper bending radius thereof. In particular, the fiber 22a may be tuned such that the temperature-dependence of the frequency supported by the fiber 22a has an extremum at the intended operation temperature, wherein the intended operation temperature is preferably a cryogenic temperature. The extremum further improves the thermal stability of the fiber oscillator 10a, as detailed, for example, in Benjamin Merkel et al.," Laser stabilization to a cryogenic fiber ring resonator", Optics Letters Vol. 46, No. 2/15, p. 444 - 447 (2021). This document is incorporated herein by reference.

According to the embodiment of Fig. 4b, the optical resonator 10b is a ring resonator 10b of a photonic integrated circuit 22b formed on or by a semiconductor 12, such as a semiconductor waver 12, or a large-bandgap material 12, such as a dielectric or an insulator, arranged over/on the substrate of the photonic integrated circuit.

According to the embodiment of Fig. 4c, the optical resonator 10c is a linear oscillator 10c of a photonic integrated circuit 22b formed on or by a semiconductor 12, such as a semiconductor waver 12.

The matrix 22 of the respective resonators 10b, 10c comprises a semiconductor material providing the matrix 22. The semiconductor material of the respective resonators 10b, 10c is doped with the rare-earth element 24 (not shown).

Respective embodiments allow for the integration of the optical resonator 10, 10b, 10c or the apparatus 2, respectively, in a photonic integrated circuit 22b at a high integration density. This is an immediate consequence of the matrix 22 with the rare-earth element 24 being suitable for spectral hole burning.

For example, semiconductor material (i.e., silicon) of an optical element as described in WO 2022/258204 A1 may be used to provide the matrix 22 of the optical resonator 10b, 10c of Fig. 4b, Fig. 4c. For example, the semiconductor material (i.e., the silicon) of the micro-resonator described in the context of Fig. 3A and Fig. 3B of WO 2022/258204 A1 or of the micro-resonator described in the context of Fig. 6A and Fig. 6B of WO 2022/258204 A1 may be used to provide the matrix 22 of the optical resonator 10b, 10c of Fig. 4b, Fig. 4c. WO 2022/258204 A1 is incorporated herein by reference.

Fig. 5 shows an apparatus 2 according to another embodiment.

The apparatus 2 of figure 5 is similar to the apparatus 2 of Fig. 1. The apparatus 2 of Fig. 5, in addition, comprises an optical excitation system 50 for burning the spectral hole into the matrix 22 with the rare-earth element 24.

In some embodiments, the optical excitation system 50 takes or receives part of the optical output 44 of the laser system 40. For example, the optical excitation system 50 comprises a beam splitter (not shown) arranged to take or receive part of the optical output 44 of the laser system 40. The beam splitter guides a portion of the optical output 44 of the laser system 40 to the matrix 22 with the rare-earth element 24 as optical excitation 52 for the spectral hole burning. Optionally, the optical excitation system 50 comprises a controllable beam splitter (not shown) adapted to interrupt the optical excitation 52 in some time intervals, and to permit the optical excitation 52 in other time intervals. The respective time intervals are chosen such that the spectral hole is re-created as needed for a specific application example.

In alternative embodiments (not shown), the optical excitation system 50 comprises an additional laser. The optical excitation 52 is provided by at least a portion 52 of the optical output of the additional laser. In respective embodiments, the optical excitation system 50 may not receive a portion of the optical output 44 of the laser system 40, i.e., the respective laser beam indicated by the dashed line 44 in Fig. 5 maybe absent. Embodiments with the additional laser may comprise or use the controllable beam splitter described above.

It is worth noting that the optional features described herein are widely compatible with each other and may be combined.

As an example, Fig. 6 shows an apparatus 2 comprising the laser system 40, the optical excitation system 50, and the control signal generator 60 described above. In alternative embodiments (not shown), any combination of two of said elements 40, 50, 60 is present. In yet alternative embodiments (not shown), the cooling system 70 and/or the mechanical-vibration reduction system 80, which will each be described in detail below, may be present in addition.

Fig. 7 shows the apparatus 2 according to another embodiment.

The apparatus 2 of figure 7 is similar to the apparatus 2 of Fig. 1. The apparatus 2 of Fig. 7, in addition, comprises a cooling system 70 adapted to cool the optical resonator 10, 10a, 10b, 10c to a cryogenic temperature. In the context of this disclosure, the term cryogenic temperature may refer to a temperature below 70 K or below 40 K or below 20 K or below 10 K.

The cooling system 70 comprises a cooling plate 72 arranged in a vicinity of the optical resonator 10, a liquid helium system 76 with a pump pumping liquid helium, and a thermal connection 74 thermally connecting the liquid helium system 76 and the cooling plate 72.

The liquid helium system 76 is arranged outside the thermal insulation system 30, which is a vacuum vessel 30 in the depicted exemplary embodiment. The term vacuum vessel 30 does not necessarily refer to a vessel comprising a vacuum, but covers vessels 30 suitable to maintain a vacuum, even if not currently under vacuum.

The cooling plate 72 is arranged inside the vacuum vessel 30 at a distance from the optical resonator 10, 10a, 10b, 10c.

During operation, the vacuum vessel 30 comprises a vacuum. In other words, the pressure inside the vacuum vessel 30 is below the pressure of the environment 32 outside of the vacuum vessel 30.

In some embodiments, the vacuum vessel 30 is fully evacuated, i.e., to a pressure < 0.01 mbar, preferably < 0.001 mbar. In such embodiments, the thermal coupling of the optical resonator 10, 10a, 10b, 10c to the cooling system 70, or, more specifically, to the cooling plate 72, occurs radiatively.

In other embodiments, the majority of gas inside the vacuum vessel 30 is an exchange gas, such as helium gas. Although the apparatus 2 is described with helium as an exemplary exchange gas, another exchange gas such as nitrogen or a noble gas other than helium may be used in some instances. The helium gas inside the vacuum vessel 30 serves as an exchange gas to thermally couple the optical resonator 10, 10a, 10b, 10c to the cooling system 70, or, more specifically, to the cooling plate 72.

Prior to operation of the cooling system 70, the vacuum vessel 30 is fully evacuated using a vacuum pump, for example to a pressure of < 0.01 mbar or < 0.001 mbar. Then, the vacuum pump is switched off and/or disconnected from the vacuum vessel 30. The helium gas is introduced to the vacuum vessel 30, for example at a pressure of at least 0.01 mbar or at least 0.1 mbar or at least 1 mbar.

At least part of the liquid helium system 76 is cooled with liquid helium by operating the pump. Via the thermal connection 74 of the cooling system 70, the liquid helium system 76 is thermally connected to the cooling plate 72. Consequently, the cooling system 70 cools the cooling plate 72, and, via the helium exchange gas, the optical resonator 10, 10a, 10b, 10c.

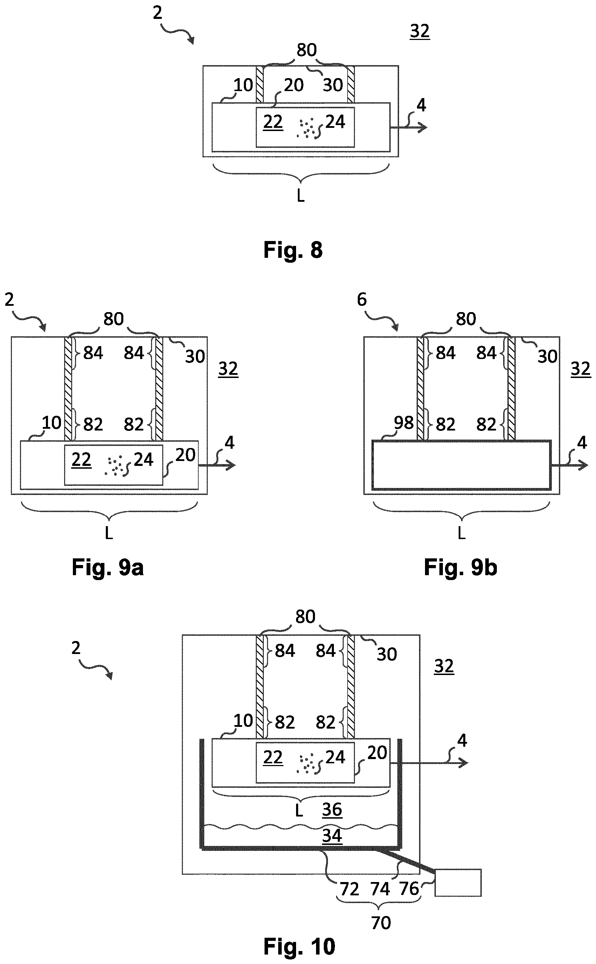

Fig. 8 shows the apparatus 2 according to another embodiment.

The apparatus 2 of figure 8 is similar to the apparatus 2 of Fig. 1. The apparatus 2 of Fig. 8, in addition, comprises a mechanical-vibration reduction system 80 adapted to reduce a mechanical vibration of the optical resonator 10, 10a, 10b, 10c.

The mechanical-vibration reduction system 80 is arranged inside the thermal insulation system 30. Therefore, the mechanical-vibration reduction system 80 may be compact and cost-efficient as compared to conventional mechanical-vibration reduction systems which hold the entire thermal insulation system 30 on its outside.

The mechanical-vibration reduction system 80 mechanically holds the optical resonator 10, 10a, 10b, 10c by mechanically connecting it to the thermal insulation system 30.

The mechanical-vibration reduction system 80 preferably comprises both active and passive components.

In the context of this disclosure, the term "passive component" encompasses an element with a high internal friction to dampen mechanical vibrations, as well as a flexible element, i.e. a spring, that leads to a mechanical decoupling of vibrational frequencies that exceed the eigenfrequency of the oscillator formed by the spring and the attached mass. The passive vibration isolation components may include a mechanism that leads to a negative spring constant and thus achieves very low eigenfrequencies of 2 Hz or less.

Active components generate mechanical movements counteracting the undesired mechanical vibrations of the optical resonator 10, 10a, 10b, 10c. This is achieved by using a sensor for detecting the mechanical vibrations of the optical resonator 10, 10a, 10b, 10c, or of the receptacle that hold the optical resonator 10, 10a, 10b, 10c. Preferably, the sensor is placed in a vicinity of the optical resonator 10, 10a, 10b, 10c or in mechanical contact, such as direct mechanical contact, with the optical resonator 10, 10a, 10b, 10c. In response to the mechanical vibrations detected by the sensor, an electromechanical system generates the mechanical movements of the active component that counteracts the undesired mechanical vibrations of the optical resonator 10, 10a, 10b, 10c. According to some embodiments, the electromechanical system comprises a piezoelectrical element or a motor for this purpose. The electromechanical system makes use of an external energy supply, for example to provide a voltage-supply to the piezoelectrical element or to the motor.

Fig. 9a shows the apparatus 2 with the mechanical-vibration reduction system 80 according to another embodiment.

The embodiment is similar to the one of Fig. 8.

A first portion 82 of the mechanical-vibration reduction system 80 is mechanically coupled to the optical resonator 10, 10a, 10b, 10c.

A second portion 84 of the mechanical-vibration reduction system 80 is mechanically coupled to the thermal insulation system 30.

During operation, the optical resonator 10, 10a, 10b, 10c is cooled to a cryogenic temperature, for example as described above in the context of Fig. 7, and the thermal insulation system 30 thermally insulates the optical resonator 10, 10a, 10b, 10c from the environment 32 outside thereof.

As a result of the arrangement depicted in Fig. 9a, the first portion 82 of the mechanical-vibration reduction system 80 is cooled (e.g., via the optical resonator 10, 10a, 10b, 10c) during operation of the apparatus 2 and therefore is at a lower temperature than the second portion 84 of the mechanical-vibration reduction system 80.

As the second portion 84 is connected to the thermal insulation system 30, it is to some degree thermally coupled to the higher temperature of the environment 32, resulting in a higher temperature of the second portion 84 of the mechanical-vibration reduction system 80 as compared to the first portion 82. This is because the thermal insulation by the thermal insulation system 30 is, in practice, imperfect and therefore heat from the environment 32 passes through the thermal insulation system 30, reaches the second portion 84 of the mechanical-vibration reduction system 80 and heats it. In some embodiments, a portion of the thermal insulation system 30 connected to the second portion 84 of the mechanical-vibration reduction system 80 is deliberately provided with a reduced thermal insulation as compared to the (e.g., average) thermal insulation of the rest of the thermal insulation system 30. The reduced thermal insulation may be such that during operation (i.e., when the optical resonator 10, 10a, 10b, 10c is at the cryogenic temperature) the apparatus 2 provides a temperature of the second portion 84 of the mechanical-vibration reduction system 80 above 100 K or above 150 K or even above 200 K or above 250 K.

Because of the higher temperature of the second portion 84 of the mechanical-vibration reduction system 80, the second portion 84 of the mechanical-vibration reduction system 80 may use components which would not be suitable for operation at a cryogenic temperature. For example, the active components described above may only be operable when their temperature is above 100 K or above 150 K or above 200 K or only above 250 K, or more cost-efficient active components can be used at the higher temperature. Many materials such as elastomers (e.g., fluorocarbon-based fluoroelastomers) or lubricants used for passive components, which typically rely on internal friction, are rigid and/or brittle at cryogenic temperatures and therefore are not suitable for mechanical-vibration damping at those cryogenic temperatures. The brittleness may also result in material failure and breaking of the component. Also, at cryogenic temperatures, the eigenfrequency of a component comprising a respective material typically increases, e.g., to a value above 10 Hz, which negatively affects the vibration reduction achieved with the component. In contrast, at a temperature above 100 K or above 150 K or above 200 K or above 250 K the respective materials and components made therefrom provide excellent mechanical-vibration reduction and damping properties, typically better than the ones of materials suitable for operation at cryogenic temperature.

In other words, the apparatus 2 according to Fig. 9a permits the use of a wide variety of elements and materials in the second portion 84 of the mechanical-vibration reduction system 80, comprising elements and materials with improved mechanical-vibration damping properties which are not operable for vibration-reduction at cryogenic temperatures.

Fig. 9b illustrates a thermal and vibrational insulation system 6. The thermal and vibrational insulation system 6 is similar to the apparatus 2 of Fig. 9a. However, instead of the optical resonator 10, 10a, 10b, 10c of the apparatus 2, the thermal and vibrational insulation system 6 comprises a body 98 with a receptacle for an optical resonator 10, 10a, 10b, 10c. The thermal and vibrational insulation system 6 of Fig. 9b is compatible with the modifications described in the context of the other embodiments, e.g., in the context of Fig. 2, Fig. 3, Fig. 7, Fig. 8, or Figs. 10 - 12.

The inventor has realized that a respective thermal and vibrational insulation system 6 can beneficially be applied to thermally and vibrationally insulate a wide variety of devices. For this purpose, the respective device is arranged in the receptacle, and the thermal insulation system 30 and the mechanical-vibration reduction system 80 are operated as described in the context of the apparatus 2, e.g. in the context of Fig. 8 and Fig. 9a.

A respective thermal and vibrational insulation system 6 provides an improved thermal and vibrational insulation to any optical, mechanical, optomechanical, or electronics device placed in the receptacle. In particular, an optical resonator, such as an optical resonator without a doped material (not shown) but otherwise exhibiting any or all the features described above in the context of the optical resonator 10, 10a, 10b, 10c of the apparatus 2, can be arranged in the receptacle to thermally and vibrationally insulate it from the environment.

Fig. 10 shows an apparatus 2 according to another embodiment.

The apparatus 2 of figure 10 is similar to the apparatus 2 of Fig. 9a. The apparatus 2 of Fig. 9a, in addition, comprises a cooling system 70, which is similar to the cooling system 70 described in the context of Fig. 7. Notably, in alternative embodiments (now shown) the apparatus 2 of Fig. 10 is provided with a body 98 comprising a receptacle (i.e., instead of with the optical resonator 10, 10a, 10b, 10c, as described, e.g., in the context of Fig. 9b) to implement a thermal and vibrational insulation system 6.

When the cooling system 70 is operated, it cools the cooling plate 72 to a cryogenic temperature. In this situation, liquid helium 34 from a helium exchange gas, such as the helium exchange gas described above in the context of figure 7, condensates at the cooling plate 72, or, in other words, in a first region 34. The first region 34 is typically close to a region where the intermediate section 74 of the cooling system 70 is in thermal contact with the cooling plate 72.

In other regions 36 inside the thermal insulation system 30, the helium exchange gas remains in the gas phase. Those are typically the regions within the thermal insulation system 30 further away from the region where the intermediate section 74 of the cooling system 70 is in thermal contact with the cooling plate 72.

Preferably, the apparatus 2 is designed such that the liquid helium 34 is at a distance from the optical resonator 10, 10a, 10b, 10c. Typically, the optical resonator 10, 10a, 10b, 10c is separated from the liquid helium 34 by a section 36 of the thermal insulation system 30 comprising helium gas.

This arrangement reduces the mechanical vibrations of the optical resonator 10, 10a, 10b, 10c. In the liquid helium 34, bubbles tend to form and cause mechanical vibrations as they leave the liquid helium 34. If the optical resonator 10, 10a, 10b, 10c would be in mechanical contact with the liquid helium 34, the mechanical vibrations of the liquid helium 34 might transfer to the optical resonator 10, 10a, 10b, 10c and cause mechanical vibrations therein. This is avoided by the separation, or the distance, between the optical resonator 10, 10a, 10b, 10c and the liquid helium 34.

On the other hand, if no liquid helium 34 forms inside of the thermal insulation system 30, this is typically indicative of an excessively high-temperature inside of the thermal insulation system 30 and/or of a lack of helium exchange gas. Such an excessively high-temperature would give rise to undesirable thermal fluctuations of the length L of the optical resonator 10, 10a, 10b, 10c. The lack of helium exchange gas would result in poor heat transfer between the optical resonator 10, 10a, 10b, 10c and the cooling system 70, which would also result in an excessively high temperature of the optical resonator 10, 10a, 10b, 10c, causing the disadvantages associated therewith.

In alternative embodiments, wherein the vacuum vessel 30 is fully evacuated (, i.e., to a pressure < 0.01 mbar or < 0.001 mbar; in other words, without use of the helium exchange gas) during operation of the optical resonator 10, 10a, 10b, 10c, or of the laser system 40, respectively, the heat transfer between the optical resonator 10, 10a, 10b, 10c and the cooling system 70 occurs radiatively, at a lower rate.

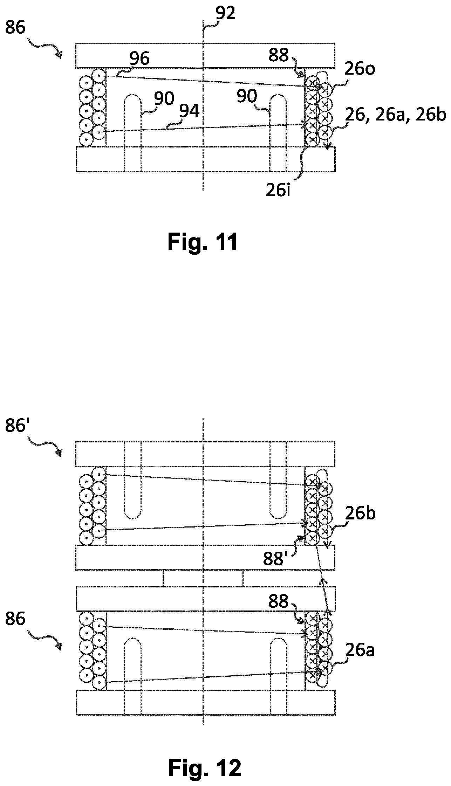

Fig. 11 shows an element 86 of a mechanical-vibration reduction system 80 according to an embodiment.

According to the embodiment of Fig. 11, the element 86 is a cylindrical body 86 with a side surface 88 for winding an optical fiber 26, 26a, 26b around it.

The optical fiber 26, 26a, 26b is wound around the side surface 88 in several layers 26i, 26o. The winding direction 94, 96 of the optical fiber 26, 26a, 26b around the axis 92 (center line 92) of the cylindrical body 86 changes between the layers 26i, 26o. In other words, the winding direction 94 of an inner layer 26i is opposite to the winding direction 96 of an outer layer 26o.

A cylindrical grove 90 of the cylindrical body 86 around its axis 92 is particularly beneficial for reducing mechanical vibrations of the optical fiber 26, 26a, 26b, as described in a different context, e.g., in I. Jeon et al., "Palm-sized, vibration-insensitive and vacuum-free all-fiber-photonic module for 10-14-level stabilization of CW lasers and frequency combs," arXiv:2311.14928 (2023). This document is herewith incorporated by reference.

Hence, the mechanical vibration system 80 with the cylindrical body 86 according to Fig. 11 beneficially provides an improved mechanical-vibration damping for the apparatus 2, in particular, when the optical fiber 26, 26a, 26b wound around the cylindrical body 86 provides the fiber oscillator 10a of the apparatus 2.

Fig. 12 shows an element 86, 86' of a mechanical-vibration reduction system 80 according to an embodiment.

The element 86, 86' is similar to the one of Fig. 11.

However, the element 86, 86' of Fig. 12 comprises (at least two) cylindrical bodies 86, 86'. Each of the cylindrical bodies 86, 86' is similar to the cylindrical body 86 of Fig. 11.

A first optical fiber 26a, or a first section 26a of the optical fiber 26, is wound around a first cylindrical body 86.

A second optical fiber 26b, or a second section 26b of the optical fiber 26, is wound around a second cylindrical body 86'.

The cylindrical bodies 86, 86' are separated from each other, e.g. by a distance or by a spacer.

In the depicted embodiment, two cylindrical bodies 86, 86' are shown, but more than two cylindrical bodies 86, 86', such as at least three or at least four cylindrical bodies 86, 86', may be provided.

A corresponding mechanical vibration system 80 is particularly beneficial for reducing mechanical vibrations of the optical fiber 26, as described in a different context, e.g., in J. Huang et al., "Vibration-insensitive fiber spool for laser stabilization," Chinese Optics Letters 17(8), 081403 (2019). This document is herewith incorporated by reference.

Hence, the mechanical vibration system 80 with the cylindrical bodies 86, 86' according to Fig. 12 beneficially provides an improved mechanical-vibration damping, in particular, when the optical fiber 26, 26a, 26b wound around the cylindrical bodies 86, 86' forms or provides the fiber oscillator 10a of the apparatus 2, as described in the context of Fig. 4a.

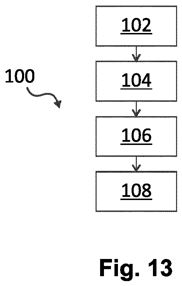

Fig. 13 illustrates a method 100 to provide a control signal 4 for stabilizing a frequency of an optical output 44 of a laser system 40.

The method 100 comprises cooling 102 an optical resonator 10, 10a, 10b, 10c to a temperature below a first temperature. The first temperature is 70 K. A doped material is arranged in the optical resonator 10, 10a, 10b, 10c. The doped material comprises a matrix 22, 22a, 22b doped with a rare-earth element 24.

The method 100 comprises providing 104 an optical input 14 to the cooled optical resonator 10, 10a, 10b, 10c.

The method 100 comprises generating 106 the control signal 4 based on an optical signal 62 from the optical resonator 10, 10a, 10b, 10c.

The method 100 comprises providing 108 the control signal 4 to the laser system 40 for stabilizing a frequency of the optical output 44 of the laser system 40.

### LIST OF REFERENCE SIGNS

- 2: apparatus for providing a control signal
- 4: control signal
- 40: laser system
- 44: optical output of the laser system
- 10, 10a, 10b, 10c: optical resonator
- 20: doped material
- 22, 22a, 22b: matrix
- 24: rare-earth element
- 30: thermal insulation system
- 32: environment outside of the thermal insulation system
- 62: optical signal from the resonator
- 14: optical input provided to the resonator
- L: length of the optical resonator
- 42: laser
- 46: optical modulation element
- 50: optical excitation system
- 52: optical excitation
- 22a: optical fiber
- 10a: fiber resonator
- 22b: photonic integrated circuit
- 10b, 10c: resonator provided by photonic integrated circuit
- 60: control signal generator
- 64: additional optical signal from the laser system
- 70: cooling system
- 72: first section of cooling system, cooling plate
- 74: intermediate section of cooling system, thermal connection
- 76: second section of cooling system, liquid helium system
- 34: first section of the thermal insulation system
- 36: second section of the thermal insulation system
- 80: mechanical-vibration reduction system
- 82: first portion of the mechanical-vibration reduction system
- 84: second portion of the mechanical-vibration reduction system
- 6: thermal and vibrational insulation system
- 98: receptacle
- 86, 86': cylindrical body
- 88, 88': surface of the cylindrical body
- 90: groove
- 92: center line, axis of cylindrical body
- 26: optical fiber
- 26a: first segment of optical fiber
- 26b: second optical fiber or second segment of the optical fiber
- 26i: first section of the optical fiber or of the first segment of the optical fiber
- 26o: second section of the optical fiber or of the first segment of the optical fiber
- 94: first winding direction
- 96: second winding direction
- 100: method
- 102: cooling an optical resonator
- 104: providing an optical input to the cooled optical resonator
- 106: generating the control signal based on an optical signal from the optical resonator
- 108: providing the control signal to the laser system

## Claims

1. An apparatus (2) for providing a control signal (4) for stabilizing a frequency of an optical output (44) of a laser system (40), the apparatus comprising:
an optical resonator (10, 10a, 10b, 10c),
a doped material (20) arranged in the optical resonator, wherein the doped material (20) comprises a matrix (22, 22a, 22b) doped with a rare-earth element (24),
a thermal insulation system (30) adapted to thermally insulate the optical resonator (10, 10a, 10b, 10c) from an environment (32) outside of the thermal insulation system (30),
wherein the apparatus is adapted to provide the control signal (4) based on an optical signal (62) from the resonator (10, 10a, 10b, 10c) when an optical input (14) is provided to the resonator (10, 10a, 10b, 10d), and
wherein the control signal (4) is associated with a length (L) of the optical resonator (10, 10a, 10b, 10c) and/or with a refractive index of the doped material (20).

2. The apparatus (2) of claim 1, which further comprises the laser system (40),
wherein the laser system (40) is adapted to, for stabilizing the frequency of the optical output (44) of the laser system (40), receive the control signal (4); and/or
wherein the laser system (40) is adapted to adjust the frequency of the optical output (44) of the laser system (40) in response to the control signal (4); and/or
wherein the laser system (40) is adapted to provide the optical input (14) to the resonator (10, 10a, 10b, 10c), in particular from the optical output (44) of the laser system (40); and/or
wherein the laser system (40) comprises a laser (42); and/or
wherein the laser system (40) comprises an optical modulation element (46), wherein the laser system (40) is adapted to provide the optical output (44) modulated by the modulation element (46), in particular wherein the modulation element comprises an electro-optical modulator and/or an acousto-optical modulator.

3. The apparatus (2) of claim 1 or 2,
wherein the doped material (20) is adapted for spectral-hole burning therein; and/or
wherein the doped material (20) is adapted to provide a group velocity of light therein which is at least ten times smaller than the speed of light in vacuum; and/or
wherein the rare-earth element (24) is erbium, thulium or praseodymium; and/or
wherein the matrix (22) is a transparent matrix (22), for example at the frequency of the optical output (44) of the laser system (40); and/or
wherein the apparatus (2) is adapted to burn a spectral hole into the doped material (20) and/or to cause a group velocity of light in the doped material which is at least ten times smaller than the speed of light in vacuum; wherein, optionally, the apparatus (2) comprises an optical excitation system (50) adapted to burn the spectral hole into the doped material (20) and/or adapted to cause a group velocity of light in the doped material (20) which is at least ten times smaller than the speed of light in vacuum, preferably, wherein the optical excitation system (50) uses an optical output (44) of the laser system (40) to burn the spectral hole into the doped material (20) and/or to cause a group velocity of light in the doped material (20) which is at least ten times smaller than the speed of light in vacuum.

4. The apparatus (2) of any of the preceding claims,
wherein the matrix (22, 22a) is an optical fiber (22a), preferably, wherein the optical fiber (22a) provides the optical resonator (10a), wherein, preferably, the optical resonator (10a) is a ring resonator or the optical resonator (10a) is formed by periodic modulations of the refractive index of the optical fiber (22a) and/or by fiber Bragg gratings; and/or
wherein the matrix (22, 22a, 22b) comprises or is composed of silicon oxide or glass.

5. The apparatus of any of the preceding claims,
wherein the matrix (22, 22b) is at least a part of a photonic integrated circuit (22b), preferably, wherein the photonic integrated circuit (22b) provides the optical resonator (10b, 10c); and/or
wherein the matrix (22, 22a, 22b) comprises or is composed of a semiconductor, in particular wherein the semiconductor is silicon, or wherein the matrix (22, 22a, 22b) comprises or is composed of an insulator or a dielectric arranged over/on a semiconductor substrate of a photonic integrated circuit (22b).

6. The apparatus (2) of any of the preceding claims, wherein the control signal (4) is an electronic signal.

7. The apparatus (2) further comprises a control signal generator (60), wherein the control signal generator (60) is adapted to receive the optical signal (62) from the resonator (10, 10a, 10b, 10c) and to generate the control signal (4) based on the optical signal (62), for example based on an intensity and/or on a power and/or on a phase of the optical signal (62);
wherein, optionally:
the control signal generator (60) is adapted to receive an additional optical signal (64) from the laser system (40) and to generate the control signal (4) based on the optical signal (62) and on the additional optical signal (64), wherein, preferably, the apparatus (2) is adapted to provide the additional optical signal (64) to the control signal generator (60) without any interaction of the additional optical signal (64) with the optical resonator (10, 10a, 10b, 10c) before the additional optical signal (64) is received by the control signal generator (60).

8. The apparatus (2) of any of the preceding claims, further comprising a cooling system (70) adapted to cool the optical resonator (10, 10a, 10b, 10c),
wherein, optionally:
the cooling system (70) is adapted to cool the resonator (10, 10a, 10b, 10c) to a temperature below a first temperature, wherein the first temperature is 70 K or 40 K or 10 K or 5 K; and/or
the cooling system (70) comprises a first section (72) arranged inside of the thermal insulation system (30), a second section (76) arranged outside of the thermal insulation system (30), and an intermediate section (74) thermally connecting the first section (72) of the cooling system (70) and the second section (76) of the cooling system (70); and/or
wherein the cooling system (70) comprises a pump adapted to drive a flow of liquid helium, and wherein the pump is arranged outside of the thermal insulation system (30) or is comprised in the second section (76) of the cooling system (70).

9. The apparatus (2) of any of the preceding claims,
wherein the thermal insulation system (30) comprises or is a vacuum vessel and/or comprises or is a containment adapted to enclose helium; and/or
wherein the thermal insulation system encloses a vacuum, for example at a pressure of < 1 mbar or < 0.1 mbar or < 0.01 mbar or < 0.001 mbar; and/or
wherein the optical resonator (10, 10a, 10b, 10c) is arranged inside the thermal insulation system (30); and/or
wherein the thermal insulation system (30) comprises liquid helium, such as in a first section (34) of the thermal insulation system (30), in particular, wherein the first section (34) of the thermal insulation system (30) is arranged in a vicinity of the optical resonator (10, 10a, 10b, 10c) and/or at a first distance from the optical resonator (10, 10a, 10b, 10c); and/or
wherein the thermal insulation system (30) comprises helium gas, such as in a second section (36) of the thermal insulation system (30) and/or at a pressure or a partial pressure of at least 0.01 mbar or of at least 0.1 mbar or of at least 1 mbar,
wherein, optionally:
the optical resonator (10) is arranged in the second section (36) of the thermal insulation system (30) and/or in physical contact with the second section (36) of the thermal insulation system (30); and/or
the first distance between the first section (34) of the thermal insulation system (30) and the optical resonator (10, 10a, 10b, 10c) exceeds a second distance between the second section (36) of the thermal insulation system (30) and the optical resonator (10, 10a, 10b, 10c); and/or
the second section (36) of the thermal insulation system (30) is arranged between the optical resonator (10, 10a, 10b, 10c) and the first section (34) of the thermal insulation system (30); and/or
the second section (36) of the thermal insulation system (30) comprises the helium gas at the pressure or the partial pressure of at least 0.01 mbar or of at least 0.1 mbar or of at least 1 mbar.

10. The apparatus (2) of any of the preceding claims, further comprising a mechanical-vibration reduction system (80) adapted to reduce a mechanical vibration of the optical resonator (10, 10a, 10b, 10c), for example a mechanical vibration of the optical resonator (10, 10a, 10b, 10c) in terms of the length (L) of the resonator (10) and/or a mechanical vibration of the optical resonator (10, 10a, 10b, 10c) that would lead to a refractive index change of the optical resonator (10, 10a, 10b, 10c) and/or a mechanical vibration of the optical resonator (10, 10a, 10b, 10c) with respect to the thermal insulation system (30); wherein, optionally:
the mechanical-vibration reduction system (80) is arranged inside the thermal insulation system (30), preferably at least in part or in its entirety; and/or
the mechanical-vibration reduction system (80) comprises a passive mechanical-vibration reduction element and/or
the mechanical-vibration reduction system (80) comprises a mechanical-vibration decoupling element mechanically connecting the optical resonator (10, 10a, 10b, 10c) to the thermal insulation system (30), and providing an eigenfrequency, such as an eigenfrequency of 2 Hz or less or of 5 Hz or less or of 10 Hz or less or of 15 Hz or less, for vibrationally decoupling the optical resonator (10, 10a, 10b, 10c) from the thermal insulation system (30) at a frequency above the eigenfrequency of the respective mechanical-vibration decoupling element, in particular, when its temperature is above 200 K or above 120 K or above 70 K or above 40 K or above 10 K, but not when its temperature is below 70 K or below 40 K or below 10 K; and/or
the mechanical-vibration reduction system (80) comprises a mechanical-vibration damping element adapted to attenuate the mechanical vibration of the optical resonator (10, 10a, 10b, 10c) using friction, in particular, when its temperature is above 200 K or above 120 K or above 70 K or above 40 K or above 10 K, but not when its temperature is below 70 K or below 40 K or below 10 K, and/or a mechanical-vibration damping element without a need for an energy supply external to the mechanical-vibration damping element; and/or
the mechanical-vibration reduction system (80) comprises an active mechanical-vibration reduction element and/or a mechanical-vibration reduction element adapted to actively counteract the mechanical vibration of the optical resonator (10, 10a, 10b, 10c) and/or a mechanical-vibration reduction element adapted to receive energy from an energy supply external to the mechanical-vibration reduction element, in particular, wherein the active mechanical-vibration reduction element is operable when its temperature is above 200 K or above 120 K or above 70 K or above 40 K or above 10 K, but not may not be operable not when its temperature is below 70 K or below 40 K or below 10 K.

11. The apparatus (2) of claim 10, wherein the mechanical-vibration reduction system (80) comprises a first portion (82) mechanically coupled to the optical resonator (10, 10a, 10b, 10c) and a second portion (84), and wherein the apparatus (2) is adapted to provide a first temperature of the first portion (82) of the mechanical-vibration reduction system (80) below a second temperature of the second portion (84) of the mechanical-vibration reduction system (80);
wherein, optionally:
the second portion (84) of the mechanical-vibration reduction system (80) is mechanically coupled to the thermal insulation system (30) and/or is in physical contact with the thermal insulation system (30); and/or
wherein the optical resonator (10, 10a, 10b, 10c) is mechanically connected to the thermal insulation system (30) via the first portion (82) and the second portion (84) of the mechanical-vibration reduction system (80); and/or the second portion (84) of the mechanical-vibration reduction system (80) is thermally coupled to the environment (32) outside of the thermal insulation system (30); and/or
the first portion (82) of the mechanical-vibration reduction system (80) and/or the second portion (84) of the mechanical-vibration reduction system (80) are/is arranged inside the thermal insulation system (30); and/or
a distance between the second portion (84) of the mechanical-vibration reduction system (80) and the optical resonator (10, 10a, 10b, 10c) exceeds a distance between the first portion (82) of the mechanical-vibration reduction system (80) and the optical resonator (10, 10a, 10b, 10c); and/or
the first portion (82) of the mechanical-vibration reduction system (80) is arranged between the optical resonator (10, 10a, 10b, 10c) and the second portion (84) of the mechanical-vibration reduction system (80); and/or
the second portion (84) of the mechanical-vibration reduction system (80) is arranged between the first portion (82) of the mechanical-vibration reduction system (80) and the thermal insulation system (30).

12. The apparatus (2) of any of claims 10 or 11,
wherein the mechanical-vibration reduction system (80) comprises a cylindrical body (86) adapted to mechanically support an optical fiber (26) arranged around a surface (88) of the cylindrical body (86); and
wherein, optionally:
the cylindrical body (86) comprises a groove (90) arranged between the respective surface (88) of the cylindrical body (90) and a center line (92) or an axis (92) of the cylindrical body (86); and/or
an optical fiber (26) or a first segment (26a) of the optical fiber (26) is arranged around the surface (88) of the cylindrical body (86) and forms the optical resonator (10, 10a, 10b, 10c) or at least a section of the optical resonator (10, 10a, 10b, 10c), in particular, wherein a first section (26i) of the optical fiber (26) or of the first segment (26a) of the optical fiber (26) is wound around the cylindrical body (86) with a first winding direction (94), and a second section (26o) of the optical fiber (26) or of the first segment (26a) of the optical fiber (26) is wound around the cylindrical body (86) and around the first section (26i) of the optical fiber (26) or of the first segment (26a) of the optical fiber (26) with a second winding direction (96) opposite to the first winding direction (94); and/or
the mechanical-vibration reduction system (80) comprises an additional cylindrical body (86') adapted to mechanically support an optical fiber (26) arranged around a second surface (88') of the additional cylindrical body (86'), in particular, wherein a second optical fiber (26b) or a second segment (26b) of the optical fiber (26) is arranged around the second surface (88') and forms a different section of the optical resonator (10, 10a, 10b, 10c).

13. Method (100) to provide a control signal (4) for stabilizing a frequency of an optical output (44) of a laser system (40), the method (100) comprising:
providing an optical resonator (10, 10a, 10b, 10c) in a thermal insulation system (30), such that a first portion (82) of a mechanical-vibration reduction system (80) is mechanically coupled to the optical resonator (10, 10a, 10b, 10c) and a second portion (84) of the mechanical-vibration reduction system (80) is mechanically coupled to the thermal insulation system (30) and that the optical resonator (10, 10a, 10b, 10c) is mechanically connected to the thermal insulation system (30) via the first portion (82) and the second portion (84) of the mechanical-vibration reduction system (80);
cooling (102) the optical resonator (10, 10a, 10b, 10c) and the first portion (82) of the mechanical-vibration reduction system (80) to a temperature below a first temperature, wherein the first temperature is 70 K;
providing (104) an optical input (14) to the cooled optical resonator (10, 10a, 10b, 10c) while keeping a second temperature of the second portion (84) of the mechanical-vibration reduction system (80) above 70 K;
generating (106) the control signal (4) based on an optical signal (62) from the optical resonator (10, 10a, 10b, 10c); and
providing (108) the control signal (4) to the laser system (40) for stabilizing the frequency of the optical output (44) of the laser system (40).

14. The method of claim 13,
which further comprises adjusting the frequency of the optical output (44) of the laser system (40) in response to the control signal (4); and/or
wherein a doped material (20) is arranged in the optical resonator (10, 10a, 10b, 10c), and wherein the doped material (20) comprises a matrix (22, 22a, 22b) doped with a rare-earth element (24); and/or
wherein the control signal (4) is associated with a length (L) of the optical resonator (10, 10a, 10b, 10c) and/or with a refractive index of the doped material (20); and/or
wherein the control signal (4) is generated based on the optical signal (62) and on an additional optical signal (64) from the laser system (40), wherein, preferably, the control signal (4) is generated based on the optical signal (62) and an additional optical signal (64) from the laser system (40) which has not interacted with the optical resonator (10, 10a, 10b, 10c); and/or
wherein the method (100) further comprises, before and/or while providing the optical input to the cooled optical resonator (10, 10a, 10b, 10c):
burning a spectral hole into the doped material (20) in the cooled optical resonator (10, 10a, 10b, 10c); and/or
causing a group velocity of light in the doped material (20) in the cooled optical resonator (10, 10a, 10b, 10c), wherein said group velocity of light is at least ten times smaller than the speed of light in vacuum; and/or
wherein the first temperature is 40 K or 10 K or 5 K.

15. A thermal and vibrational insulation system (6) for thermally and vibrationally insulating an optical resonator (10, 10a, 10b, 10c) from an environment (32), the thermal and vibrational insulation system (6) comprising:
a body (98) comprising a receptacle for receiving the optical resonator (10, 10a, 10b, 10c);
a mechanical-vibration reduction system (80) adapted to reduce a mechanical vibration of the receptacle; and
a thermal insulation system (30) adapted to thermally insulate the receptacle from the environment (32), wherein the environment (32) refers to an environment outside of the thermal insulation system (30), wherein the body (98) comprising the receptacle and the mechanical-vibration reduction system (80) is arranged in the thermal insulation system (30);
wherein the mechanical-vibration reduction system (80) comprises a first portion (82) mechanically coupled to the body (98) comprising the receptacle and a second portion (84) mechanically coupled to the thermal insulation system (30);
wherein the body (98) comprising the receptacle is mechanically connected to the thermal insulation system (30) via the first portion (82) and the second portion (84) of the mechanical-vibration reduction system (80);
wherein the second portion (84) of the mechanical-vibration reduction system (80) comprises a mechanical-vibration reduction element comprising an elastomer; and/or
wherein the second portion (84) of the mechanical-vibration reduction system (80) comprises a mechanical-vibration reduction element operable to reduce the mechanical vibration of the body comprising the receptacle when the temperature of the mechanical-vibration reduction element is above 200 K, but not operable to reduce the mechanical vibration of the body comprising the receptacle when the temperature of the mechanical-vibration reduction element is below 20 K.
